# EUROPÄISCHE PATENTSCHRIFT

(11) **EP 1 513 721 B1**
(45) Veröffentlichungstag und Bekanntmachung des Hinweises auf die Patenterteilung: **02.08.2006**
(21) Anmeldenummer: 03760555.7
(22) Anmeldetag: 05.06.2003
(51) Int. Cl.: B62D 25/24

(54) **VERSCHLUSSDECKEL**
CLOSING LID
BOUCHON D'OBTURATION

(30) Priorität: 19.06.2002 DE 20209513 U
(43) Veröffentlichungstag der Anmeldung: 16.03.2005
(73) Patentinhaber: TRW Automotive Electronics & Components GmbH & Co. KG, 78315 Radolfzell (DE)
(72) Erfinder: KRAUS, Willi, 67269 Grünstadt (DE)
(74) Vertreter: Eder, Thomas
(86) Internationale Anmeldenummer: PCT/DE2003/001861
(87) Internationale Veröffentlichungsnummer: WO 2004/000632

(56) Entgegenhaltungen:
- US-A- 3 244 308
- US-A- 3 430 777
- US-A- 3 923 195

## Beschreibung

Die Erfindung bezieht sich auf einen Verschlussdeckel, bestehend aus zwei Kunststoff-Komponenten, zum dichten Abschluss einer Öffnung in einer Trägerplatte, insbesondere einer Kraftfahrzeug-Karosserie, mit einem napfartig ausgebildeten Deckelteil und einem Einsatzteil nach dem Oberbegriff des Anspruchs 1.

Als Stand der Technik ist bereits ein derartiger Verschlussdeckel mit den Merkmalen der Oberbegriffe der Anspruche 1 und 4 bekannt (US-A-3,430,777), welcher insbesondere zum Verschließen einer Flaschenöffnung dient. Er weist eine entsprechende konstruktive Gestaltung auf, d.h. ein längliches korkenartiges Element mit einem mittleren Zapfenteil, welches ein Deckelteil durchsetzt.

Weiterer Stand der Technik ist ein Verschlussdeckel (US-A-3,244,308), welcher als Flaschenverschluss vorgesehen ist und lediglich aus einer Materialkomponente besteht. Der Außenumfang beaufschlagt unter Druck den Innenumfang eines Flaschenhalses.

Weiterer Stand der Technik ist eine Vorrichtung zur Messung eines Flüssigkeitspegels innerhalb einer Öffnung (US-A-3,923,195).

Darüber hinaus ist ein aus zwei Kunststoffkomponenten bestehender Verschlussdeckel bekannt (DE 195 46 160 A1). Hierbei besteht das Deckelteil aus einer Kernkomponente aus einem harten Material, wohingegen ein mit dem Deckelteil verbundenes Abdeckteil aus einer äußeren Komponente aus einem weicheren Material hergestellt ist. Dieses Abdichtteil ist zumindest an dem Außenrand mit einer Trägerplatte verklebbar.

Darüber hinaus zählt zum Stand der Technik ein Verschlussdeckel zum dichten Abschluss einer Öffnung in einer Trägerplatte (DE 43 27 945 A1). Hierbei besteht eine Kernkomponente aus einem harten Material, wobei eine Schalenkomponente aus einem weicheren Material vorgesehen ist, welches die Kernkomponente umschließt. Diese Schalenkomponente ist an den Außenrändern mit der Trägerplatte verklebbar.

Demgegenüber besteht die Aufgabe der vorliegenden Erfindung darin, einen Verschlussdeckel gemäß dem Oberbegriff des Anspruchs 1 zu schaffen, welcher bei einfacherer Montage ohne Verwendung eines Klebeverfahrens einen dichten Abschluss einer Öffnung einer Trägerplatte gewährleistet, insbesondere zur Anwendung bei einer Kraftfahrzeug-Karosserie.

Diese Aufgabe wird gemäß dem kennzeichnenden Teil des Anspruchs 1 gelöst. Dadurch, dass der Rastbereich des Zwischenringes in zwei hintereinander liegende Gegenrasten am äußeren Umfang des Bundes des Einsatzteils zur Vormontage bzw. zur Endmontage einlagerbar ist, ergibt sich eine leichte Handhabung bei der Verwendung des erfindungsgemäßen Verschlussdeckels, was insbesondere im Bereich der Kraftfahrzeug-Zulieferindustrie von großem und kostensparendem Vorteil ist.

Vorteilhafte Weiterbildungen ergeben sich aus den Unteransprüchen.

Die Erfindung wird nachfolgend anhand von in der Zeichnung dargestellten Ausführungsbeispielen näher beschrieben. In der Zeichnung zeigen:
- Fig. 1: Einen schematischen Mittelschnitt durch ein Deckelteil und ein Einsatzteil vor der Vormontage,
- Fig. 2: eine Draufsicht auf das Deckelteil nach Fig. 1,
- Fig. 3: eine vergrößerte Darstellung im Bereich X gemäß Fig. 1,
- Fig. 4: eine perspektivische Ansicht des Deckelteils nach Fig. 1,
- Fig. 5: eine Ausführungsform ähnlich nach Fig. 1 in vormontierter Position,
- Fig. 6: die Ausführungsform nach Fig. 5 in montierter Position,
- Fig. 7: eine andere Ausführungsmöglichkeit der Erfindung im schematischen Mittelschnitt.

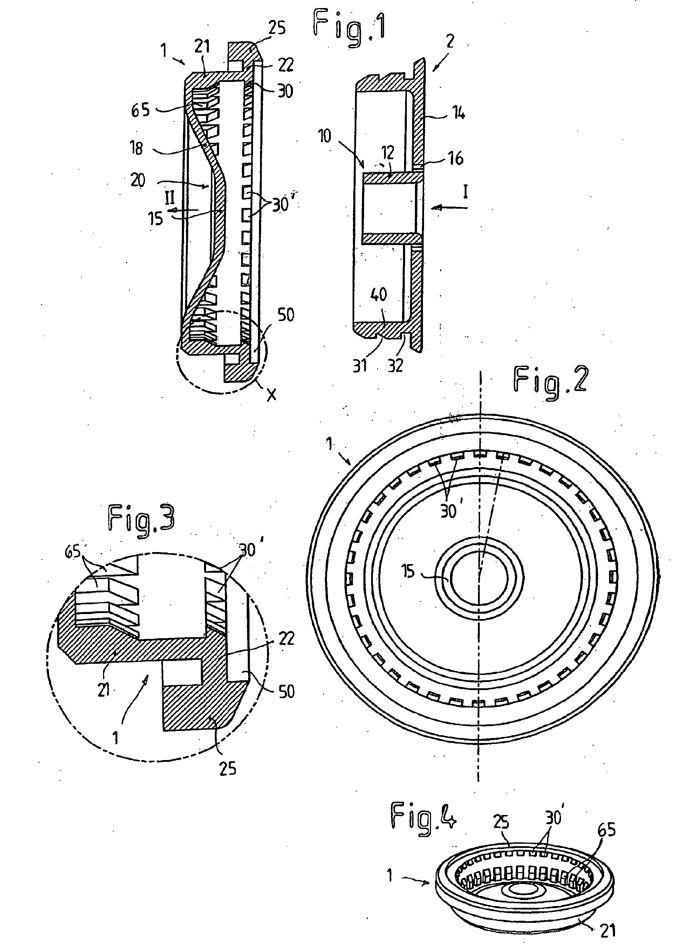

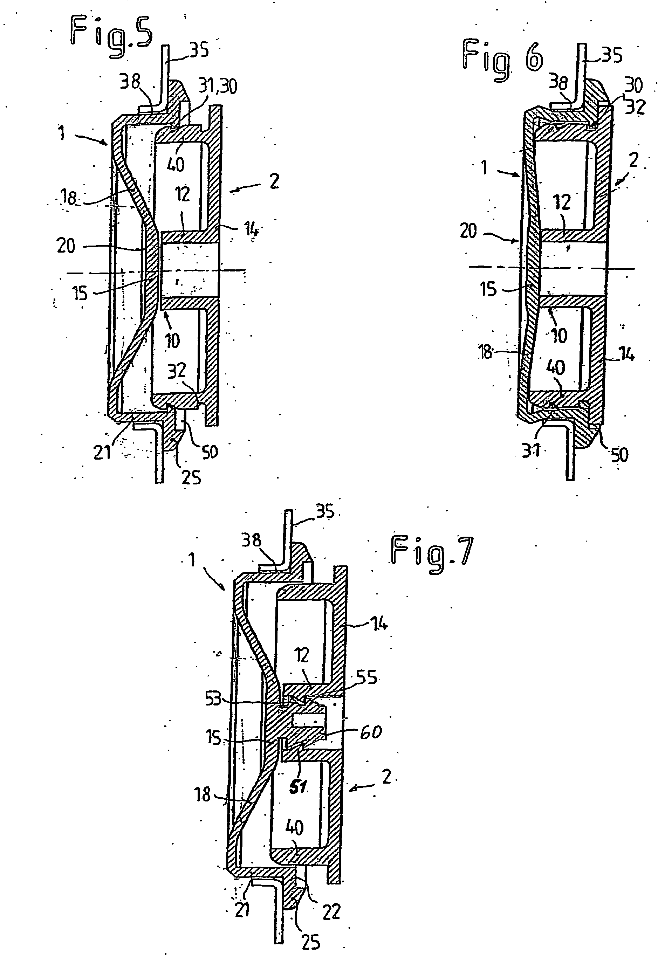

In Fig. 1 ist der erfindungsgemäße Verschlussdeckel dargestellt, welcher aus zwei Kunststoff-Komponenten besteht. Dieser Verschlussdeckel dient zum dichten Abschluss einer z.B. in Fig. 5 und 6 dargestellten Öffnung 38 in einer Trägerplatte 35, insbesondere einer Kraftfahrzeugkarosserie.

Der Verschlussdeckel besteht aus einem napfartig ausgebildeten Deckelteil 1 und einem Einsatzteil 2. Das Einsatzteil 2 ist aus einer Hartkomponente hergestellt und weist einen zentrischen Bereich 10 auf, welcher im montierten Zustand des Verschlussdeckels eine Platte 15 in Form eines elastischen Gegenbereichs 20 des Deckelteils 10 beaufschlagt.

Der elastische Gegenbereich 20 des Deckelteils 1 ist über einen dünneren Kegelabschnitt 18 mit einem Bund 21 des Deckelteils 1 verbunden ist.

Aus Fig. 1 ist darüber hinaus erkennbar, dass bezüglich des Einsatzteils 2 der zentrische Bereich 10 als Hohlzylinder 12 ausgebildet ist. Dieser Hohlzylinder 12 ist mit einer Abschlussplatte 14 des Einsatzteils 2 verbunden.

Zwischen der Abschlussplatte 14 des Einsatzteils 2 und dem Hohlzylinder 12 sind über den Umfang verteilt eine Anzahl von Aussparungen 16 vorgesehen.

Der Bund 21 des Deckelteils 1 geht über einen Zwischenring 22 in einen Abschlussbereich 25 über, welcher im montierten Zustand des Verschlussdeckels die Trägerplatte 35 im Bereich der Öffnung 38 beaufschlagt.

Insbesondere aus Fig. 1 und 3 ist darüber hinaus erkennbar, dass der Zwischenring 22 einen Rastbereich 30 aufweist, welcher beispielsweise aus einer Anzahl über den Umfang verteilter Rastzähne 30' besteht. Der Bund 21 des Deckelteils 1 weist darüber hinaus innenseitig eine Anzahl über den Umfang verteilter Stege 65 auf.

Das Einsatzteil 2 weist einen Bund 40 auf, welcher mit zwei hintereinander liegenden Gegenrasten 31 und 32 versehen ist.

Zur Vormontage wird nach Fig. 5 das Einsatzteil 2 in Pfeilrichtung I in das Deckelteil 1 gedrückt, bis die Rast 30 des Deckelteils 1 sich in der Gegenrast 31 des Einsatzteils 2 einlagert (gemäß Fig. 5 und 6 besteht die Rast 30 aus einem umlaufenden Ring). In diesem Zustand ist es möglich, den aus den beiden Einheiten 1 und 2 bestehenden Verschlussdeckel in die Öffnung 38 einer Trägerplatte 35 einzusetzen. Nach diesem Einsetzen wird nach Fig. 6 das Einsatzteil 2 wiederum in Pfeilrichtung I in das Deckelteil 1 hineingedrückt, bis sich die Rast 32 in die Rast 30 des Deckelteils 1 einlagert. Bei dieser Bewegung drückt der Hohlzylinder 12 auf die Platte 15 und bewegt diese infolge des elastischen kegelförmigen Zwischenbereichs 18 in Pfeilrichtung II. Hierdurch verformt sich der Bund 21 des elastischen Deckelteils 1, wodurch der benachbarte Bereich der Öffnung 38 der Trägerplatte 35 beaufschlagt wird und somit einen dichten Abschluss dieser Öffnung 38 gewährleistet.

Die Abschlussplatte 14 des Einsatzteils 2 überragt den Bund 40, wobei im montierten Zustand nach Fig. 6 sich diese Abschlussplatte 14 in einer entsprechenden Ausnehmung 50 des Deckelteils 1 einlagert.

Bei der Ausführungsform nach Fig. 7 besteht die Möglichkeit, dass der Hohlzylinder 12 eine Rast 51 aufweist, welche in zwei hintereinander liegende Gegenrasten 53 und 55 eines Zapfens 60 einlagerbar sind. Dieser Zapfen 60 befindet sich an der Platte 15 des Deckelteils 1. Wiederum können zwei Positionen, nämlich Vormontage und Endmontage analog der Darstellung nach Fig. 5 und 6 eingenommen werden.

Durch die konstruktiv einfache Gestaltung des Verschlussdeckels, bestehend aus dem Deckelteil 1 und dem Einsatzteil 2 wird in verschiedenen Ausführungsmöglichkeiten auf einfache Weise ein dichter Abschluss einer Öffnung 38 in einer Trägerplatte 35 hergestellt, wobei die gesamte Einheit zunächst in Vormontage in die Öffnung 38 einführbar und dann in der Endmontage diese einwandfrei und funktionssicher verschließt.

## Patentansprüche

1. Verschlussdeckel, bestehend aus zwei Kunststoff-Komponenten, zum dichten Abschluss einer Öffnung (38) in einer Trägerplatte (35), insbesondere einer Kraftfahrzeugkarosserie, mit einem napfartig ausgebildeten Deckelteil (1) und einem Einsatzteil (2),
wobei das aus einer Hartkomponenten bestehende Einsatzteil einen zentrischen Bereich (10) aufweist, welcher im montierten Zustand des Verschlussdeckels einen elastischen Gegenbereich (20) des Deckelteils (1) beaufschlagt und das Deckelteil (1) und das Einsatzteil (2) im montierten Zustand miteinander verriegelbar sind,
wobei der elastische Gegenbereich (20) des Deckelteils (1) eine dem zentrischen Bereich (10) des Einsatzteils (2) gegenüberliegende Platte (15) aufweist, welche über einen dünnen Kegelabschnitt (18) mit einem Bund (21) des Deckelteils (1) verbunden ist
und wobei der Bund (21) des Deckelteils (1) über einen Zwischenring (22) in einen Abschlussbereich (25) übergeht, welcher im montierten Zustand des Verschlussdeckels die Trägerplatte im Bereich der Öffnung beaufschlagt und mit einem Rastbereich (30) versehen ist,
**dadurch gekennzeichnet,**
**dass** der Rastbereich (30) des Zwischenrings (22) in zwei hintereinander liegende Gegenrasten (31; 32) am äußeren Umfang des Bundes (40) des Einsatzteils (2) zur Vormontage bzw. zur Endmontage einlagerbar ist.

2. Verschlussdeckel nach Anspruch 1, **dadurch gekennzeichnet, dass** der Rastbereich (30) aus einer Anzahl über den Umfang verteilter Rastzähne (30') besteht.

3. Verschlussdeckel nach Anspruch 1, **dadurch gekennzeichnet, dass** der Bund (21) des Deckelteils (1) innenseitig eine Anzahl über den Umfang verteilter Stege (65) aufweist.

4. Verschlussdeckel, bestehend aus zwei Kunststoff-Komponenten, zum dichten Abschluss einer Öffnung (38) in einer Trägerplatte (35), insbesondere einer Kraftfahrzeugkarosserie, mit einem napfartig ausgebildeten Deckelteil (1) und einem Einsatzteil (2),
wobei das aus einer Hartkomponenten bestehende Einsatzteil einen zentrischen Bereich (10) aufweist, welcher im montierten Zustand des Verschlussdeckels einen elastischen Gegenbereich (20) des Deckelteils (1) beaufschlagt und das Deckelteil (1) und das Einsatzteil (2) im montierten Zustand miteinander verriegelbar sind,
wobei der elastische Gegenbereich (20) des Deckelteils (1) eine dem zentrischen Bereich (10) des Einsatzteils (2) gegenüberliegende Platte (15) aufweist, welche über einen dünnen Kegelabschnitt (18) mit einem Bund (21) des Deckelteils (1) verbunden ist, und
wobei der Bund (21) des Deckelteils (1) über einen Zwischenring (22) in einen Abschlussbereich (25) übergeht, welcher im montierten Zustand des Verschlussdeckels die Trägerplatte im Bereich der Öffnung beaufschlagt,
**dadurch gekennzeichnet,**
**dass** der Hohlzylinder (12) eine Rast (51) aufweist, welche in zwei hintereinanderliegende Gegenrasten (53; 55) eines Zapfens (60) an der Platte (15) des Deckelteils (1) zur Vormontage bzw. zur Endmontage einlagerbar ist.

## Claims

1. Closing lid, comprising two plastic components, for the sealed closure of an opening (38) in a support panel (35), in particular of a motor vehicle body, having a lid part (1) of cup-shaped design and an insert part (2),
the insert part, which consists of a hard component, having a central region (10) which, in the assembled state of the closing lid, acts on an elastic mating region (20) of the lid part (1), and the lid part (1) and the insert part (2) can be locked to one another in the assembled state,
the elastic mating region (20) of the cover part (1) having a panel (15) which lies opposite the central region (10) of the insert part (2) and is connected to a collar (21) of the lid part (1) via a thin cone portion (18),
and the collar (21) of the lid part (1) merging via an intermediate ring (22) into a closure region (25) which, in the assembled state of the closing lid, acts on the support panel in the region of the opening and is provided with a latching region (30),
**characterized**
**in that** the latching region (30) of the intermediate ring (22) can be received in two mating latches (31; 32), located one behind the other, at the outer circumference of the collar (40) of the insert part (2) for preassembly and/or for final assembly.

2. Closing lid according to Claim 1, **characterized in that** the latching region (30) comprises a number of latching teeth (30') distributed over the circumference.

3. Closing lid according to Claim 1, **characterized in that** the collar (21) of the lid part (1), on the inner side, has a number of webs (65) distributed over the circumference.

4. Closing lid, comprising ;two plastic components, for the sealed closure of an opening (38) in a support panel (35), in particular of a motor vehicle body, having a lid part (1) of cup-shaped design and an insert part (2),
the insert part, which consists of a hard component, having a central region (10) which, in the assembled state of the closing lid, acts on an elastic mating region (20) of the lid part (1), and the lid part (1) and the insert part (2) can be locked to one another in the assembled state,
the elastic mating region (20) of the cover part (1) having a panel (15) which lies opposite the central region (10) of the insert part (2) and is connected to a collar (21) of the lid part (1) via a thin cone portion (18),
the collar (21) of the lid part (1) merging via an intermediate ring (22) into a closure region (25) which, in the assembled state of the closing lid, acts on the support panel in the region of the opening,
**characterized**
**in that** the hollow cylinder (12) has a latch (51) which can be received in two mating latches (53; 55), located one behind the other, of a stud (60) on the panel (15) of the lid part (1) for preassembly and/or for final assembly.

## Revendications

1. Bouchon d'obturation, constitué de deux composants en matière plastique, destiné à obturer de manière étanche une ouverture (38) dans une plaque de support (35), notamment une carrosserie de véhicule automobile, comprenant une partie de bouchon (1) conçue en forme de godet et une partie d'insert (2),
la partie d'insert constituée d'un composant dur comprenant une zone centrale (10), laquelle sollicite à l'état monté du bouchon d'obturation une contre-zone élastique (20) de la partie de bouchon (1) et la partie de bouchon (1) et la partie d'insert (2) peuvent être verrouillées l'une avec l'autre à l'état monté,
la contre-zone élastique (20) de la partie de bouchon (1) comprenant une plaque (15) opposée à la zone centrale (10) de la partie d'insert (2), laquelle plaque est reliée à un collet de butée (21) de la partie de bouchon (1) par une mince section conique (18)
et le collet de butée (21) de la partie de bouchon (1) passant au-dessus d'un anneau intermédiaire (22) dans une zone de raccordement (25), laquelle sollicite, à l'état monté du bouchon d'obturation, la plaque de support dans la zone de l'ouverture et est pourvue d'une zone d'enclenchement (30),
**caractérisé en ce que**
la zone d'enclenchement (30) de l'anneau intermédiaire (22) peut être insérée dans deux contre-encoches (31 ; 32) situées l'une derrière l'autre sur la périphérie extérieure du collet de butée (40) de la partie d'insert (2) en vue du montage préliminaire et/ou du montage final.

2. Bouchon d'obturation selon la revendication 1, **caractérisé en ce que** la zone d'enclenchement (30) est constituée d'un certain nombre de dents d'enclenchement (30') réparties sur la périphérie.

3. Bouchon d'obturation selon la revendication 1, **caractérisé en ce que** le collet de butée (21) de la partie de bouchon (1) comprend côté intérieur un certain nombre de nervures (65) réparties sur la périphérie.

4. Bouchon d'obturation, constitué de deux composants en matière plastique, destiné à obturer de manière étanche une ouverture (38) dans une plaque de support (35), notamment une carrosserie de véhicule automobile, comprenant une partie de bouchon (1) en forme de godet et une partie d'insert (2),
la partie d'insert constituée d'un composant dur comprenant une zone centrale (10), laquelle sollicite, à l'état monté du bouchon d'obturation, une contre-zone élastique (20) de la partie de bouchon (1) et la partie de bouchon (1) et la partie d'insert (2) peuvent être verrouillées l'une avec l'autre à l'état monté,
la contre-zone élastique (20) de la partie de bouchon (1) comprenant une plaque (15) opposée à la zone centrale (10) de la partie d'insert (2), laquelle plaque est reliée par une mince section conique (18) à un collet de butée (21) de la partie de bouchon (1), et
le collet de butée (21) de la partie de bouchon (1) passant au-dessus d'un anneau intermédiaire (22) dans une zone de raccordement (25), laquelle sollicite, à l'état monté du bouchon d'obturation, la plaque de support dans la zone de l'ouverture,
**caractérisé en ce que**
le cylindre creux (12) comprend une encoche (51), laquelle peut être insérée dans deux contre-encoches (53 ; 55) situées l'une derrière l'autre d'un tourillon (60) sur la plaque (15) de la partie de bouchon (1) en vue du montage préliminaire et/ou du montage final.
